# EUROPEAN PATENT APPLICATION

(11) **EP 1 850 522 A2**
(43) Date of publication of application: **31.10.2007**
(21) Application number: 07008549.3
(22) Date of filing: 26.04.2007
(51) Int. Cl.: H04L 1/18

(54) **Method and apparatus for handling segmentation and numbering of SDUS in wireless communications systems**

(30) Priority: 27.04.2006 US 745749 P
(71) Applicant: Innovative Sonic Limited, Tortola (VG)
(72) Inventor: Jiang, Sam, Shiaw-Shiang, Peitou Taipei City (TW)
(74) Representative: Weber, Joachim

(57) **Abstract**

A method for handling segmentation and numbering of protocol data units (PDUs) in a radio link control (RLC) entity (306) of a wireless communications system includes handling a plurality of service data units (SDUs), an SDU of the plurality of SDUs having at least a first sequence number (SN) field and a first data field, a PDU of the RLC entity having a second data field storing all or segmented data of the first data field, the PDU further having a second SN field at least storing a value of the first SN field, and the RLC entity using the second SN field for performing an automatic repeat request, duplicate detection, a sequence number check, in-sequence delivery, etc.

## Description

This application claims the benefit of the filing date of U.S. Provisional Patent Application No. 60/745,749, filed on April 27, 2006, the contents of which are hereby incorporated by reference.

The present invention relates to a method of numbering protocol data units utilized in a radio link control entity of a wireless communications system for performing automatic retransmission requests, duplicate detection, sequence number check, and in-sequence delivery and related communications device according to the pre-characterizing clauses of claims 1, 3, 8, 12, 13, 15,20, and 24.

Communications systems are formed of many layers. Each layer can receive service data units (SDU) outputted by the layer above them, and use specific calculations or processing to form protocol data units (PDU) to send to the layer below them. Conversely, each layer can also recover SDUs from PDUs outputted by the lower layer and send the SDUs to the upper layer. This type of "hierarchical" relationship between layers in the communications system is a well-known industry standard. For example, a "Network Layer" is higher than a "Link Layer," the Link Layer is higher than a "Physical Layer," and so on.

This type of layered architecture is advantageous for establishment and revision of communications protocols. However, relatively low correlation between layers makes data processing procedures more complicated, which is a disadvantage for high-speed and high-throughput applications. For example, if a communications protocol entity, e.g. an RLC layer of a mobile system, supports SDU segmentation, the communications protocol entity can segment an SDU outputted by an upper layer into multiple parts, then form corresponding PDUs for output to a peer end, i.e. one SDU is carried by many PDUs. In order to prevent loss of one or more of the PDUs from causing the peer end to be unable to recover the original SDU, the prior art adds an explicit sequence number to each PDU, which the peer end can utilized to determine whether or not any PDUs were lost.

Generally speaking, the explicit sequence number is attached to a header of the PDU, which increases the size of the PDU, making increases in system resources and time necessary for processing segmentation of the SDU. Further, a number of bits needed for representing the explicit sequence number must be sufficient to prevent problems generated by the sequence number going back to zero, and thereby maintain system operation. In addition, in advanced high-speed mobile communications systems, such as an Evolved UMTS Terrestrial Radio Access Network.(e-UTRAN), the RLC entity is allowed to not segment the SDU, i.e. one SDU is carried by one PDU. However, when the system becomes busy, the system can determine if segmentation of the SDU is necessary, increase the number of PDUs accordingly, and correspondingly add the explicit sequence numbers to maintain normal operation in the peer end.

This in mind, the present invention aims at providing a method of numbering protocol data units utilized in a radio link control entity of a wireless communications system for performing automatic retransmission requests, duplicate detection, sequence number check, and in-sequence delivery and related communications device that reduces the amount of system resources required for explicit sequence numbering, and thus increases system efficiency.

This is achieved by a method of numbering protocol data units utilized in a radio link control entity of a wireless communications system for performing automatic retransmission requests, duplicate detection, sequence number check, and in-sequence delivery and related communications device according to claims 1, 3, 8, 12, 13, 15, 20, and 24. The dependent claims pertain to corresponding further developments and improvements.

As will be seen more clearly from the detailed description following below, the claimed method of numbering protocol data units utilized in a radio link control entity of a wireless communications system for performing automatic retransmission requests, duplicate detection, sequence number check, and in-sequence delivery and related communications device includes assigning a second sequence number field comprising at least a value of the first sequence number field to a PDU, and utilizing the RLC entity to use the second sequence number field to perform the automatic retransmission request, the duplicate detection, the sequence number check, or the in-sequence delivery.

In the following, the invention is further illustrated by way of example, taking reference to the accompanying drawings. Thereof
Fig. 1 is a diagram of processing SDU segmentation in an advanced wireless communications system according to the prior art,
Fig. 2 is a function block diagram of a wireless communications system,
Fig. 3 is a diagram of program code in Fig. 2,
Fig. 4 is a flowchart diagram of an embodiment of the present invention method,
Figs. 5-7 are diagrams of packet forms of a PDU, and
Fig. 8 is a flowchart diagram of a second embodiment of the present invention method.

If a communications protocol entity, e.g. an RLC layer of a mobile system, supports SDU segmentation, the communications protocol entity can segment an SDU outputted by an upper layer into multiple parts, then form corresponding PDUs for output to a peer end, i.e. one SDU is carried by many PDUs. In order to prevent loss of one or more of the PDUs from causing the peer end to be unable to recover the original SDU, the prior art adds an explicit sequence number to each PDU, which the peer end can utilized to determine whether or not any PDUs were lost. Generally speaking, the explicit sequence number is attached to a header of the PDU, which increases the size of the PDU, making increases in system resources and time necessary for processing segmentation of the SDU. Further, a number of bits needed for representing the explicit sequence number must be sufficient to prevent problems generated by the sequence number going back to zero, and thereby maintain system operation. For example, in a Universal Mobile Telecommunications System (UMTS) Radio Link Control (RLC) protocol specification (3GPP TS 25.322) set forth by the 3^{rd} Generation Partnership Project (3GPP), the sequence number used by the RLC entities when operating in acknowledged mode (AM) is 12 bits long, and the sequence number used by the RLC entities when operating in unacknowledged mode (UM) is 7 bits long.

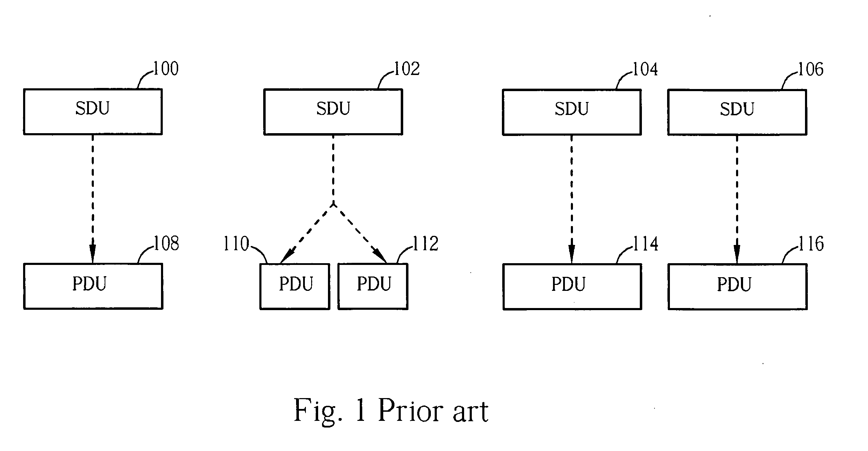

Please refer to Fig. 1 , which is a diagram of processing SDU segmentation in an advanced mobile system according to the prior art. In Fig. 1, SDUs 100, 102, 104, and 106 can be of a same size, or of different sizes. The SDU 102 is segmented into two parts, perhaps because the system is busy, and carried by two PDUs 110 and 112 respectively. In other words, the SDUs 100, 102, 104, and 106 are carried by PDUs 108, 110, 112, 114, and 116. In this situation, the prior art adds a sequence number field to each of the PDUs 108, 110, 112, 114, and 116. If each sequence number field is 7 bits long, a total of 35 bits will be added to the original SDUs 100, 102, 104, and 106.

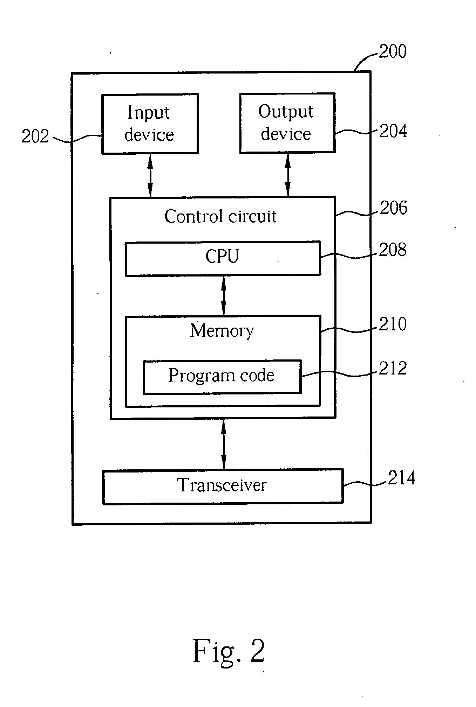

Please refer to Fig. 2, which is a functional block diagram of a communications device 200. For the sake of brevity, Fig. 2 only shows an input device 202, an output device 204, a control circuit 206, a central processing unit (CPU) 208, a memory 210, a program code 212, and a transceiver 214 of the communications device 200. In the communications device 200, the control circuit 206 executes the program code 212 in the memory 210 through the CPU 208, thereby controlling an operation of the communications device 200. The communications device 200 can receive signals input by a user through the input device 202, such as a keyboard, and can output images and sounds through the output device 204, such as a monitor or speakers. The transceiver 214 is used to receive and transmit wireless signals, delivering received signals to the control circuit 206, and outputting signals generated by the control circuit 206 wirelessly. From a perspective of a communications protocol framework, the transceiver 214 can be seen as a portion of Layer 1, and the control circuit 206 can be utilized to realize functions of Layer 2 and Layer 3.

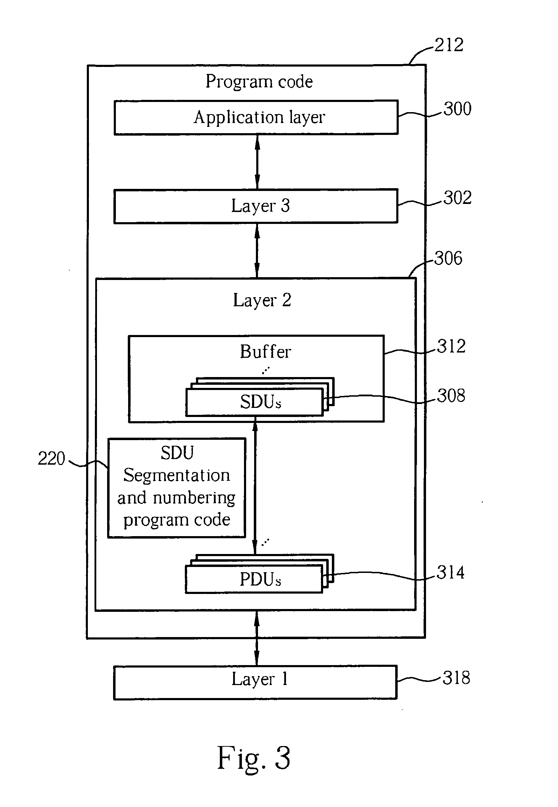

Please continue to refer to Fig. 3. Fig. 3 is a diagram of the program code 212 shown in Fig. 2. The program code 21 2 comprises an application layer 300, a Layer 3 interface 302, and a Layer 2 interface 306, and is coupled to a Layer 1 interface 318. When transmitting a signal, the Layer 2 interface 306 forms a plurality of service data units (SDU) 308 according to data outputted by the Layer 3 interface 302, and stores the plurality of SDUs 308 in a buffer 312. Then, the Layer 2 interface 306 generates a plurality of protocol data units (PDU) 314 according to the plurality of SDUs 308 stored in the buffer 312, and outputs the plurality of PDUs 314 through the Layer 1 interface 318 to a target end. In contrast, when receiving radio signals, the radio signals are received through the Layer 1 interface 318, and the received radio signals are outputted to the Layer 2 interface 306 as PDUs 314. The Layer 2 interface 306 restores the PDUs 314 to SDUs 308, and stores the SDUs 308 in the buffer 312. Finally, the Layer 2 interface 306 sends the SDUs 308 stored in the buffer 312 to the Layer 3 interface 302.

Typically, the Layer 2 interface 306 comprises two sub-layers: a radio link control (RLC) entity, and a media access control (MAC) entity. The RLC entity is primarily used for providing different transmission quality processing. Based on different transmission quality requirements, the RLC entity performs corresponding processing on transmitted data or control instructions. The MAC entity can assign packets from different logic channels of the RLC entity to specific transport channels based on radio resource allocation commands of the Layer 3 interface (RRC layer) 302, in order to perform further processing.

In advanced wireless communications systems, when the system is busy, the RLC entity can segment SDUs, increase the number of PDUs, and add explicit sequence numbers to maintain normal operation in the peer end. In this situation, the present invention provides SDU segmentation and numbering program code 220 for reducing system resources needed for segmenting the SDUs to prevent radio resource waste, and reduce unnecessary transmissions.

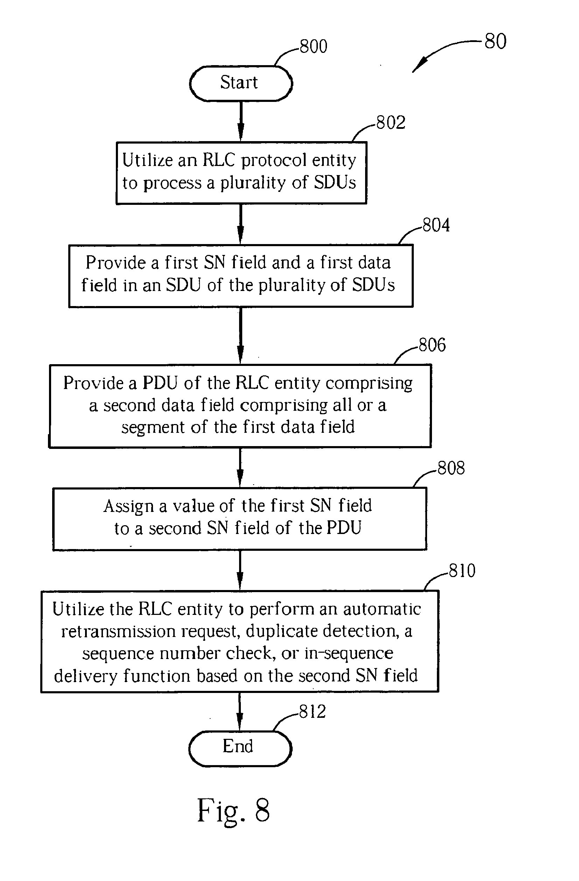

Please refer to Fig. 8, which is a flowchart diagram of a procedure 80 according to an embodiment of the present invention. The procedure 80 is utilized in the RLC entity of the wireless communications system for processing numbering of PDUs to perform an automatic retransmission request, duplicate detection, a sequence number check, or in-sequence delivery. The procedure 80 can be seen as the SDU segmentation and numbering program code 220, and comprises the following steps:
Step 800: Start.
Step 802: Utilize an RLC protocol entity to process a plurality of SDUs.
Step 804: Provide a first SN field and a first data field in an SDU of the plurality of SDUs.
Step 806: Provide a PDU of the RLC entity comprising a second data field comprising all or a segment of the first data field.
Step 808: Assign a value of the first SN field to a second SN field of the PDU.
Step 810: Utilize the RLC entity to perform an automatic retransmission request, duplicate detection, a sequence number check, or in-sequence delivery function based on the second SN field.
Step 812: End.

According to the procedure 80, if the data field of the RLC entity PDU comprises all or partial data of the data field of the SDU, the SN field of the PDU comprises the value of the SN field of the SDU, and the RLC entity utilizes the SN field of the PDU to perform the automatic retransmission request, the duplicate detection, the sequence number check, or the in-sequence delivery. In other words, the RLC entity reuses the SN set by the upper-layer entity for the SDU as the value of the SN field of the PDU. This reduces the number of bits required for the explicit sequence number.

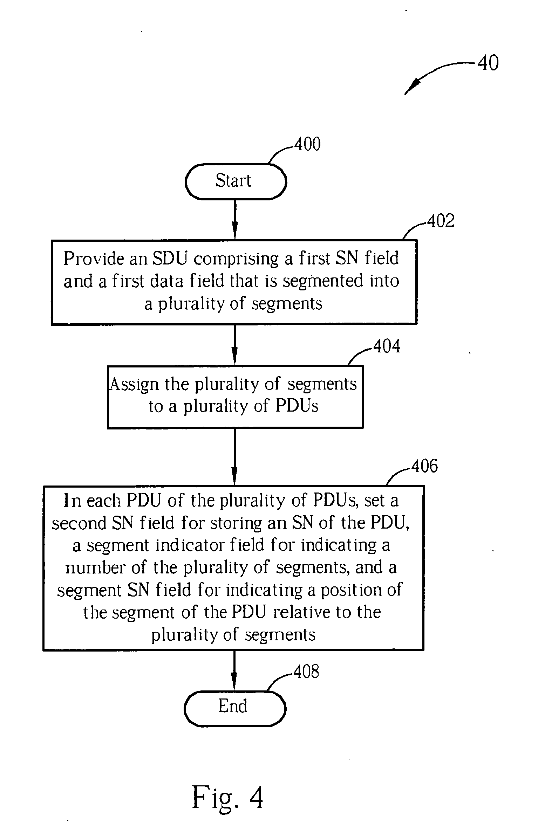

Please refer to Fig. 4, which is a flowchart diagram of a procedure 40 according to another embodiment of the present invention. The procedure 40 is utilized in an RLC entity of an advanced wireless communications system for processing segmentation and numbering of a plurality of SDUs. Every SDU of the plurality of SDUs can be segmented into a plurality of segments. The process 40 can be seen as the SDU segmentation and numbering program code 220, and comprises the following steps:
Step 400: Start.
Step 402: Provide an SDU comprising a first SN field and a first data field that is segmented into a plurality of segments.
Step 404: Assign the plurality of segments to a plurality of PDUs.
Step 406: In each PDU of the plurality of PDUs, set a second SN field for storing an SN of the PDU, a segment indicator field for indicating a number of the plurality of segments, and a segment SN field for indicating a position of the segment of the PDU relative to the plurality of segments.
Step 408: End.

According to the procedure 40, when the data field of the SDU is segmented into the plurality of segments, the present invention assigns the plurality of segments to the plurality of PDUs, i.e. every segment is carried by one PDU respectively, and every PDU comprises a second SN field, a segment indicator field, and a segment SN field, which are used for storing the SN of the PDU, the number of SDU segments, and the relative position of the segment carried by each PDU, respectively. In other words, when the SDU comprises the SN set by the upper layer, and is segmented into many segments, the present invention uses the segment indicator field and the segment SN field of each PDU carrying one of these segments to record information about the segment being carried by the PDU. Thus, the number of bits required for the explicit sequence number is reduced. Further, the present invention can reuse the SN set by the upper layer. Even further, the present invention can adjust the number of bits required for the segment indicator field and the segment SN field according to the number of segments of the SDU.

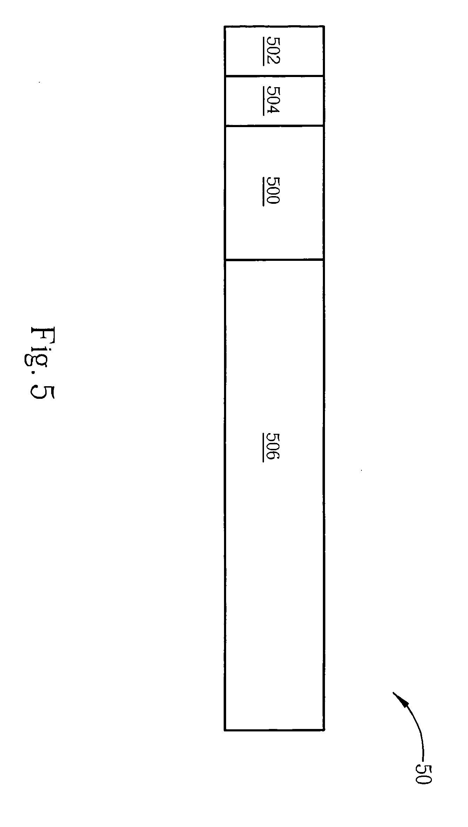

Please refer to Fig. 5, which is a diagram of a packet format utilized for the PDUs used to carry the SDU when the SDU can either be segmented into two segments or cannot be segmented at all. As shown in Fig. 5, a PDU 50 comprises a second SN field 500, a segment indicator field 502, a segment SN field 504, and a data field 506. The second SN field 500 is utilized for storing the SN of the PDU (the upper-layer SN contained in the SDU can be reused). The segment indicator field 502 and the segment SN field 504 are utilized for storing segment information. The data field 506 is utilized for storing the data field or a segment of the data field of the corresponding SDU. In this example, both the minimum bit lengths required to represent the segment indicator field 502 and the segment SN field 504 are 1. When the SDU corresponding to the PDU 50 is not segmented, the segment indicator field 502 is 0, showing that the SDU is not segmented, and the segment SN field 504 does not exist or can be ignored if it exists. When the SDU corresponding to the PDU 50 is segmented into two segments, the segment indictor field 502 is 1, showing that the SDU is segmented into two segments, and the segment SN field 504 is either 0 or 1, respectively representing that the PDU is carrying either the first segment or the second segment of the two segments. Thus, by adding only 1 to 2 bits, the present invention can completely represent segmenting information for the SDU, and the bit number of the explicit sequence number information is reduced dramatically.

If the PDU 50 is applied to the situation shown in Fig. 1, and the PDUs 108, 110, 112, 114, and 116 are given the same packet format as the PDU 50, compared to the original SDUs 100, 102, 104, and 106, each of the PDUs 108, 114, and 116, only requires an additional 1 bit for the segment indicator field, the PDU 110 requires an additional 1-bit segment indicator field and a 1-bit segment SN field, and the PDU 112 requires an additional 1-bit segment indicator field, a 1-bit segment SN field, and a 7-bit upper-lay SN field. To sum up, a total of 14 additional bits is required for PDUs 108, 110, 112, 114, and 116. For the same conditions, the prior art requires an additional 35 bits for PDUs 108, 110, 112, 114, and 116. Thus, the present invention clearly reduces the amount of system resources required for explicit sequence numbering, and thus increases system efficiency.

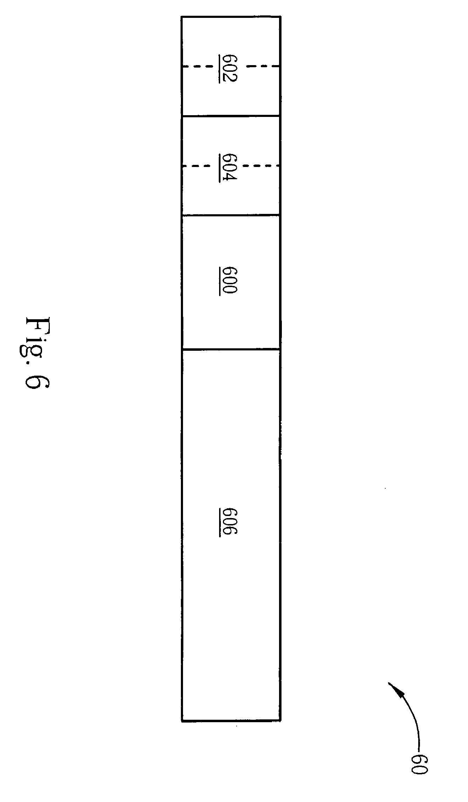

It is worth noting that the PDU 50 shown in Fig. 5 is only one embodiment of the present invention, and should not limit the scope of the present invention. Those of normal skill in the art could easily design other packet formats to match the requirements according to the procedure 40. For example, when the SDU can be segmented into two segments, four segments, or not segmented, the PDU used to carry the SDU could have a packet format like that shown in Fig. 6. In Fig. 6, a PDU 60 comprises a second SN field 600, a segment indicator field 602, a segment SN field 604, and a data field 606. The second SN field 600 is used for storing an SN of the PDU 60 (the upper-layer SN contained in the SDU can be reused), the segment indicator field 602 and the segment SN field 604 are used for storing segmenting information, and the data field 606 is used for storing the data field of the corresponding SDU. In this example, both the minimum bit lengths required to represent the segment indicator field 602 and the segment SN field 604 are 2. When the SDU corresponding to the PDU 60 is not segmented, the segment indicator field 602 is 00, indicating that the SDU is not segmented, and the segmenting SN field 604 is non-existent or is ignored if it exists. When the SDU corresponding to the PDU 60 is segmented into two segments, the segment indictor field 602 is 01, indicating that the SDU is segmented into two segments, and the segment SN field is 00 or 01, indicating that the PDU is carrying either the first segment or the second segment of the two segments. When the SDU corresponding to the PDU 60 is segmented into four segments, the segment indicator field 602 is 10, indicating that the SDU is segmented into four segments, and the segment SN field 604 is 00, 01, 10, or 1 1, indicating that the PDU is carrying either the first, second, third, or fourth segment of the four segments. In this example, the value 11 in the segment indicator field 602 is reserved for other applications. Thus, when the SDU has two possible segmenting methods, the present invention only needs to add 2 to 4 bits to completely represent the segmenting information of the SDU, and the explicit sequence numbering bit number is dramatically reduced.

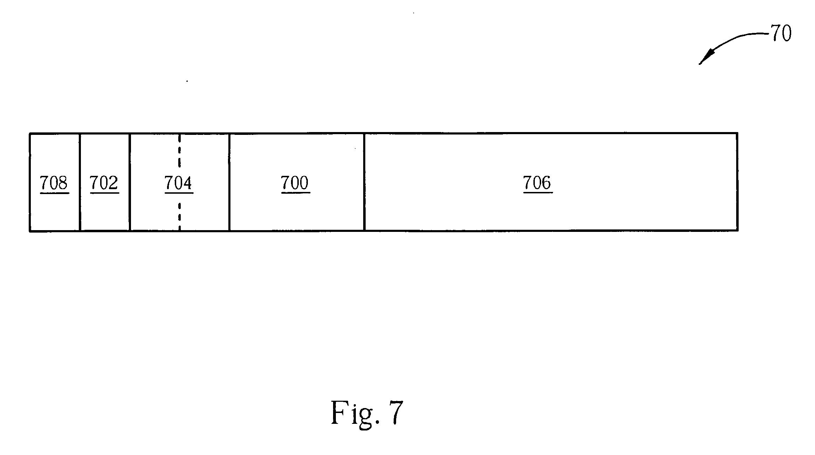

In the prior art, the PDU further requires a type indicator field that is 1 bit in length for indicating whether the PDU is a data PDU or a control PDU. The present invention can take advantage of the type indicator field to increase the efficiency of processing segmenting and numbering, as shown in Fig. 7. In Fig. 7, a PDU 70 comprises a sequence number field 700, a segment indicator field 702, a segment SN field 704, a data field 706, and a type indicator field 708. The sequence number field 700 is utilized for storing a sequence number of the PDU 70 (the upper-layer sequence number contained in the SDU can be reused), the segment indicator field 702 and the segment SN field 704 are used for storing segmenting information, the data field 706 is used for storing the data field or a segment of the data field of the corresponding SDU, and the type indicator field 708 is used for indicating whether the PDU 70 is a data PDU or a control PDU. In this example, the type indicator field 708 cooperates with the segment indicator field 702 to indicate segmentation status. When the type indicator field 708 is 1 and the segment indicator field 702 is 0, the PDU 70 is a data PDU, the corresponding SDU is not segmented, and the segment SN field 704 is non-existent. When the type indicator field 708 is 1 and the segment indicator field 702 is also 1, the PDU is a data PDU, the corresponding SDU is segmented into two segments, and the length of the segment SN field 704 is at least 1 bit. When the type indicator field 708 is 0 and the segment indicator field 702 is 1, the PDU 70 is a data PDU, the corresponding SDU is segmented into four segments, and the segment SN field 704 is at least 2 bits long. When the type indicator field 708 is 0 and the segment indicator field 702 is also 0, the PDU 70 is a control PDU, and the segment SN field 704 is non-existent.

Thus, using the PDU 70, the control PDU can be represented with two bits (the type indicator field 708 and the segment indicator field 702), but only 1 bit is added to represent three different statuses of segmentation, e.g. no segmentation, segmented into two segments, or segmented into four segments. Because the frequency of use of control PDUs is relatively lower than data PDUs, compared to the PDU 60, the PDU 70 does not require the extra type indicator field, and can further improve system efficiency. In other words, if the type indicator field 708 is combined with the segment indicator field 702, and seen as an integrated segment indicator field, the integrated segment indicator field (708 + 702) can be used to indicate whether or not the PDU 70 is a control PDU. In this way, the extra, special-use type indicator field of the prior art can be reduced. The integrated segment indicator field (708 + 702) of Fig. 7 is shown with 2 bits as an example. Of course, the integrated segment indicator field could have a length exceeding 2 bits.

## Claims

1. A method of numbering protocol data units, called PDU hereinafter, utilized in a radio link control, called RLC hereinafter, entity (306) of a wireless communications system for performing automatic retransmission requests, duplicate detection, sequence number check, and in-sequence delivery, the method comprising:
utilizing the RLC entity to process a plurality of service data units, called SDU hereinafter; (802)
assigning at least a first sequence number field and a first data field to an SDU of the plurality of SDUs; (804)
assigning a second data field to a PDU of the RLC entity, the second data field comprising all or a segment of the first data field; (806) and
**characterized by**:
assigning a second sequence number field comprising at least a value of the first sequence number field to the PDU; (808) and
utilizing the RLC entity to use the second sequence number field to perform the automatic retransmission request, the duplicate detection, the sequence number check, or the in-sequence delivery. (810)

2. The method of claim 1 **characterized by** utilizing an upper-layer protocol entity to set the value of the first SN field.

3. A method of processing segmentation and numbering of service data units, called SDU hereinafter, the method utilized in a protocol entity of a wireless communications system and comprising:
providing an SDU (102) having a first sequence number, called SN hereinafter, field and a first data field segmented into a plurality of segments; (402)
assigning the plurality of segments to a plurality of protocol data units, called PDU hereinafter (110, 112); (404) and
**characterized by**:
in a PDU (110, 112) of the plurality of PDUs (110, 112), setting a second SN field (500, 600, 700) for storing a SN of the PDU, setting a segment indicator field (502, 602, 708, 702) for indicating a count of the plurality of segments of the first data field, and setting a segment SN field (504, 604, 704) for indicating a position of the segment stored in the PDU relative to the plurality of segments. (406)

4. The method of claim 3 **characterized by** storing a value of the first SN field in the second SN field.

5. The method of claim 3, **characterized in that** the protocol entity is a radio link control, called RLC hereinafter, entity, and the method is
**characterized by**:
utilizing at least the second SN field (500, 600, 700) and the segment SN field (504, 604, 704) to perform an automatic retransmission request, duplicate detection, a sequence number check, or in-sequence delivery.

6. The method of claim 3 **characterized by** utilizing an upper-layer protocol entity to set the value of the first SN field.

7. The method of claim 3 **characterized by** adjusting a length of the segment SN field (504, 604, 704) according to a value of the segment indicator field (502, 602, 708, 702) of the SDU.

8. A method of processing segmentation and numbering of service data units, called SDU hereinafter, utilized in a protocol entity of a wireless communications system, the method comprising:
providing an SDU (100, 104, 106) comprising a first sequence number, called SN hereinafter, field and a first data field that is not segmented;
assigning the first data field to a corresponding protocol data unit, called PDU hereinafter (108, 114, 116); and
**characterized by**:
in the PDU, setting a second SN field (500, 600, 700) for storing a SN of the PDU, and setting a segment indicator field (502, 602, 708, 702) for indicating that the SDU is not segmented.

9. The method of claim 8, **characterized in that** the second SN field stores a value of the first SN field.

10. The method of claim 8, **characterized in that** the protocol entity is a radio link control called RLC hereinafter, entity, and the method
**characterized by**:
utilizing at least the second SN field to perform an automatic retransmission request, duplicate detection, a sequence number check, or in-sequence delivery.

11. The method of claim 8 **characterized by** utilizing an upper-layer protocol entity to set a value of the first SN field.

12. A method of processing segmentation and numbering of service data units, called SDU hereinafter, utilized in a protocol entity of a wireless communications system, the method comprising:
providing an SDU (102) comprising at least a data field segmented into a plurality of segments;
assigning the plurality of segments to a plurality of protocol data units, called PDU hereinafter (110, 112); and
**characterized by**:
in a PDU (110, 112) of the plurality of PDUs, setting a segment indicator field (708, 702) for indicating a count of the plurality of segments, or for indicating that the segment is a start, middle, or end segment of the data field; and
utilizing the segment indicator field (708, 702) to indicate that the PDU is a control PDU.

13. A communications device (200) utilized in a wireless communications system for numbering a protocol data unit, called PDU hereinafter, in a radio link control, called RLC hereinafter, entity (306) of the wireless communications system to perform an automatic retransmission request, duplicate detection, a sequence number check, or in-sequence delivery, the communications device comprising:
a controller circuit (206) for realizing functions of the communications device;
a processor (208) installed in the control circuit, for executing a program code to command the control circuit; and
a memory (210) installed in the control circuit and coupled to the processor for storing the program code;
**characterized in that** the program code comprises:
utilizing the RLC entity to process a plurality of service data units, called SDU hereinafter; (802)
assigning at least a first sequence number field and a first data field to an SDU of the plurality of SDUs; (804)
assigning a second data field to a PDU of the RLC entity, the second data field comprising all or a segment of the first data field; (806) and
**characterized by**:
assigning a second sequence number field comprising at least a value of the first sequence number field to the PDU; (808) and
utilizing the RLC entity to use the second sequence number field to perform the automatic retransmission request, the duplicate detection, the sequence number check, or the in-sequence delivery. (810)

14. The communications device of claim 13, **characterized in that** a value of the first sequence number field is set by an upper-layer protocol entity.

15. A communications device (200) for use in a wireless communications system, utilized for processing segmentation and numbering of service data units, called SDU hereinafter, in a protocol entity of the wireless communications system, the communications device comprising:
a controller circuit (206) for realizing functions of the communications device;
a processor (208) installed in the control circuit, for executing a program code to command the control circuit; and
a memory (210) installed in the control circuit and coupled to the processor for storing the program code;
**characterized in that** the program code comprises:
providing an SDU (102) having a first sequence number, called SN hereinafter, field and a first data field segmented into a plurality of segments; (402)
assigning the plurality of segments to a plurality of protocol data units, called PDU hereinafter (110, 112); (404) and
**characterized by**:
in a PDU (110, 112) of the plurality of PDUs (110, 1 1 2), setting a second SN field (500, 600, 700) for storing a SN of the PDU, setting a segment indicator field (502, 602, 708, 702) for indicating a count of the plurality of segments of the first data field, and setting a segment SN field (504, 604, 704) for indicating a position of the segment stored in the PDU relative to the plurality of segments. (406)

16. The communications device of claim 15, **characterized in that** the second SN field stores a value of the first SN field.

17. The communications device of claim 15, **characterized in that** the protocol entity is a radio link control, called RLC hereinafter, entity, and the program code **characterized by**:
utilizing at least the second SN field (500, 600, 700) and the segment SN field (504, 604, 704) to perform an automatic retransmission request, duplicate detection, a sequence number check, or in-sequence delivery.

18. The communications device of claim 15, **characterized in that** a value of the first SN field is set by an upper-layer protocol entity.

19. The communications device of claim 15, **characterized in that** the program code is **characterized by** adjusting a length of the segment SN field (504, 604, 704) according to a value of the segment indicator field (502, 602, 708, 702) of the SDU.

20. A communications device (200) utilized in a wireless communications system for processing segmentation and numbering of service data units, called SDU hereinafter, in a protocol entity of the wireless communications system, the communications device comprising:
a controller circuit (206) for realizing functions of the communications device;
a processor (208) installed in the control circuit, for executing a program code to command the control circuit; and
a memory (210) installed in the control circuit and coupled to the processor for storing the program code;
**characterized in that** the program code comprises:
providing an SDU (100, 104, 106) comprising a first sequence number, called SN hereinafter, field and a first data field that is not segmented;
assigning the first data field to a corresponding protocol data unit, called PDU hereinafter (108, 114, 116); and
**characterized by**:
in the PDU, setting a second SN field (500, 600, 700) for storing a SN of the PDU, and setting a segment indicator field (502, 602, 708, 702) for indicating that the SDU is not segmented.

21. The communications device of claim 20, **characterized in that** a value of the first sequence number field is stored in the second sequence number field.

22. The communications device of claim 20, **characterized in that** the protocol entity is a radio link control, called RLC hereinafter, entity, and the program code **characterized by**:
utilizing at least the second SN field to perform an automatic retransmission request, duplicate detection, a sequence number check, or in-sequence delivery.

23. The communications device of claim 20, **characterized in that** a value of the first sequence number field is set by an upper-layer protocol entity.

24. A communications device (200) utilized in a wireless communications system for processing segmentation and numbering of service data units, called SDU hereinafter, in a protocol entity of the wireless communications system, the communications device comprising:
a controller circuit (206) for realizing functions of the communications device;
a processor (208) installed in the control circuit, for executing a program code to command the control circuit; and
a memory (210) installed in the control circuit and coupled to the processor for storing the program code;
**characterized in that** the program code comprises:
providing an SDU (102) comprising at least a data field segmented into a plurality of segments;
assigning the plurality of segments to a plurality of protocol data units, called PDU hereinafter (110, 112); and
**characterized by**:
in a PDU (110, 112) of the plurality of PDUs, setting a segment indicator field (708, 702) for indicating a count of the plurality of segments, or for indicating that the segment is a start, middle, or end segment of the data field; and
utilizing the segment indicator field (708, 702) to indicate that the PDU is a control PDU.
